# EUROPEAN PATENT SPECIFICATION

(11) **EP 1 579 719 B1**
(45) Date of publication and mention of the grant of the patent: **26.09.2012**
(21) Application number: 03780458.0
(22) Date of filing: 18.12.2003
(51) Int. Cl.: H04W 72/04, H04W 16/14

(54) **METHOD AND DEVICE FOR RADIO RESOURCE ALLOCATION IN MULTI-STANDARD WIRELESS COMMUNICATION SYSTEMS**
VERFAHREN UND VORRICHTUNG ZUR FUNKRESSOURCENZUWEISUNG IN DRAHTLOSEN MULTISTANDARD-KOMMUNIKATIONSYSTEMEN
PROCEDE ET DISPOSITIF POUR L'ALLOCATION DE RESSOURCE RADIO DANS DES SYSTEMES DE COMMUNICATION SANS FIL MULTINORME

(30) Priority: 27.12.2002 CN 02160404
(43) Date of publication of application: 28.09.2005
(73) Proprietor: Koninklijke Philips Electronics N.V., 5621 BA Eindhoven (NL)
(72) Inventor: CHENG, Jiang, Philips Electronics China, 200070 Shanghai (CN); MA, Ni, Philips Electronics China, 200070 Shanghai (CN); ZHANG, Xuejun, Philips Electronics China, 200070 Shanghai (CN)
(74) Representative: Verweij, Petronella Danielle
(86) International application number: PCT/IB2003/006128
(87) International publication number: WO 2004/060002

(56) References cited:
- WO-A-02/28135
- WO-A-02/073366
- US-A- 5 732 076

## Description

### Field of the Invention

The present invention relates to multi-standards wireless communication systems; and, more particularly, to method and apparatus for allocating RF resources in multi-standard communication systems.

### Background of the Invention

With the development of mobile communication systems, more and more communication standards (i.e.wireless communication schemes) came into emergence, e.g., GSM, IS-95 and CDMA, which belong to the second generation (2G) communication scheme, GPRS and TSM, which belong to the from-2G-to-3G communication scheme, TD-SCDMA, W-CDMA and cdma2000, which fall into the third generation (3G) communication scheme, and even WLAN, another popular wireless communication scheme, and etc.

According to the regulation of ITU, mobile communication systems with different wireless communication schemes are required to transmit data using carriers in different frequency bands. However, with the rapid development of communication services, various wireless communication schemes appeared, i.e. different wireless communication schemes may transmit data using different carriers within the same frequency band. Typically, TSM communication scheme proposed by CWTS (China Wireless Communication Standard group) shares the same frequency band with TD-SCDMA communication scheme.

TD-SCDMA is a TDD-mode communication scheme to transmit data with SCDMA (synchronous code division multiple access) technology, while TSM is designed as an evolving communication scheme from existing communication system with GSM communication scheme to the communication system with TD-SCDMA communication scheme. As an interim communication scheme, TSM communication scheme shares the same frequency band with TD-SCDMA communication scheme to transmit data.

When a communication system is evolving from TSM communication scheme to TD-SCDMA communication scheme, TSM subscribers and TD-SCDMA subscribers experience constant changes, i.e., in the prologue of the evolution, TSM subscribers account for the majority, with the evolution going along TSM subscribers decrease and TD-SCDMA subscribers increase gradually, and TSM subscribers only account for a minority while TD-SCDMA subscribers constitute the majority in the epilogue of the evolution. Distinct changes in the structure of TSM subscribers and TD-SCDMA subscribers require different frequency resources, therefore the limited frequency resources need to be allocated dynamically among co-existing wireless communication schemes, so as to achieve rational allocation and reuse of RFresources.

Document US 5732076A discloses an integrated communication system supporting multiple TDMA or TDD communication protocols, whereby both protocols are supported within the same geographical region. A dynamic allocation of time slots to users using the multiple communication protocols is described.

### Summary of the invention

It is, therefore, an object of the present invention to provide a method and an apparatus for allocating RF resources in multi-standard wireless communication systems, which capable of dynamically allocating limited RF resources to co-existing wireless communication schemes according to the requirements.

Another object of the invention is to provide a method and an apparatus for allocating RF resources in multi-standard wireless communication systems, which capable of statistically configuring the RF resources shared by co-existing wireless communication schemes to improve the utilization of spectrum, in the long evolving process.

Another object of the invention is to provide a method and an apparatus for allocating RF resources among multi-standard wireless communication systems, which capable of making expected configurations to the RF resources shared by co-existing wireless communication schemes to improve the utilization of spectrum, in the prologue and the epilogue of the evolution.

To meet the object above, a method for allocating RF resources among multi-standard wireless communication systems according to claim 1 is proposed in the present invention.

To achieve the object above, a device for allocating RF resources among multi-standard wireless communication systems according to claim 13 is proposed in the present invention.

To attain the object above, a wireless communication system according to claim 25 is proposed in the present invention.

### Brief Description of the Drawings

Further description to the invention will be given below, in conjunction with the accompanying figures, wherein:
Fig. 1 diagrams the structure of a cellular communication system;
Fig. 2 depicts the structure of each cell of the cellular communication system in Fig. 1;
Fig. 3 illustrates the structure of a base station/node of each cell in Fig. 2;
Fig. 4 is the flow chart of the expected configuration method 1;
Fig. 5 is the flow chart of the expected configuration method 2;

### Detailed Description of the Preferred Embodiments

This invention provides a method and an apparatus for dynamically allocating RF resources to co-existing wireless communication schemes in a base station, according to different requirements of the co-existing wireless communication schemes. In the following embodiments of a wireless communication system where TSM and TD-SCDMA wireless communication schemes co-exist, the method and apparatus have different characteristics when applied in said co-existing wireless communication schemes during different evolving phases.

Descriptions will respectively be presented, in conjunction with the accompanying drawings, to the method and apparatus for statistical configuration of the shared RF resources, as provided in the invention, during the evolving process, and the method and apparatus for expected configuration of the shared RF resources, as provided in the invention, during the prologue and the epilogue of the evolving process, in the communication system where TSM and TD-SCDMA wireless communication schemes co-exist.

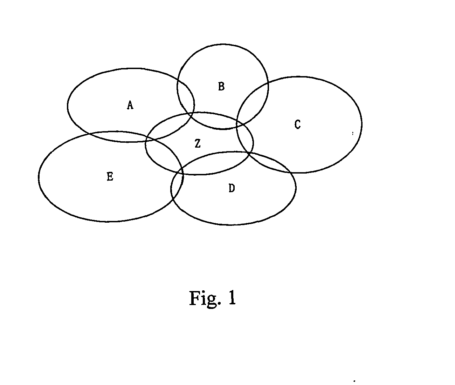

As shown in Fig. 1, A, B, C, D, E and Z represent 6 cells, which constitute a mobile communication system where cell Z is the center cell and cell A-E are adjacent cells of cell Z.

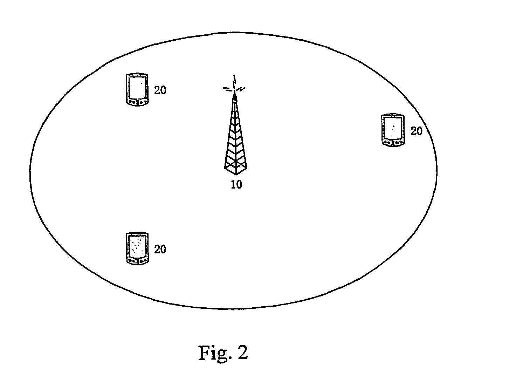

As shown in Fig. 2, every cell in Fig. 1 contains a base station 10 (namely Node B), and one or many mobile terminals 20.

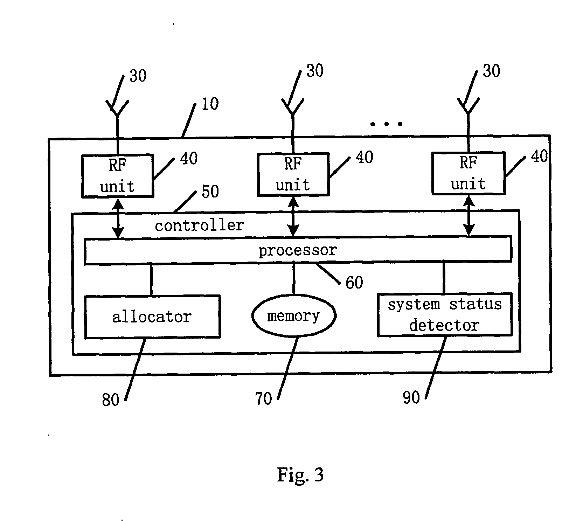

Fig. 3 demonstrates the structure of the base station 10 of a cell in Fig.2. As shown in Fig. 3, the base station 10 includes N antennas 30 for receiving and transmitting RF signals, N RF units 40 and a controller 50, wherein:

Every RF unit 40 is composed of a transceiver, a modulator and a demodulator. An input/output of the transceiver is coupled to the corresponding antenna 30 to receive RF signals from antenna 30 or transmit RF signals via antenna 30, an output of the transceiver is coupled to an input of said demodulator to demodulate the received RF signals, and an input of the transceiver is coupled to the output of said modulator to send the modulated signals to antenna 30 for transmitting. Every RF unit 40 has its own RF carriers to transmit data.

Said controller 50 comprises a processor 60, an allocator 80, a memory 70 and a system status detector 90, wherein said processor 60 is coupled to another input/output of the transceiver in each said RF units 40, to receive signals from each RF units 40, at the same time said processor 60 communicates with allocator 80, memory 70 and system status detector 90, more particularly, status detector 90 detects the types of the wireless communication schemes which are requested to access, according to the signals from processor 60; when used to store information on RF resources allocation in multi-standard wireless communication systems, memory 70 is also used to record the number of the requests for accessing each of the wireless communication schemes detected by status detector 90 in a certain period, if the base station chooses the method of statistical configuration of RF resources; resource allocator 80 dynamically allocates RF resources shared by said TSM and TD-SCDMA wireless communication schemes, according to the number of the requests for accessing each of the different wireless communication schemes recorded by the memory in statistical configuration method, or according to the types of the wireless communication schemes detected by status detector 90 and the information on RF resources allocation stored in the memory; then processor 60 controls and adjusts the RF carriers in RF unit 40 according to instructions from resource allocator 80.

Detailed descriptions as follows will be respectively given to said statistical configuration method and expected configuration method, according to different evolving phases of TSM and TD-SCDMA communication schemes.

### Statistical configuration method

Generally speaking, the evolution from TSM communication scheme to TD-SCDMA communication scheme is a long-term procedure, which could last several years. In this case, subscribers of the two wireless communication schemes won't change dramatically during the procedure, so the configuration of RF resources can be done at intervals, for example every other month.

Resource allocator 80 reallocates RF carriers in each cell according to the number of the requests for accessing each of TSM wireless communication scheme and the number for TD-SCDMA wireless communication scheme recorded by memory 70 within an interval, wherein the number recorded by memory 70 is the total traffic load number of each of the two wireless communication schemes within the whole interval. Before the next interval starts, memory 70 will be cleared to record the number of the requests for accessing each of TSM and TD-SCDMA wireless communication schemes detected by status detector 90 in the next interval.

Two embodiments will be offered to display the statistical configuration method, wherein allocator 80 dynamically allocates RF resources according to the number of the requests for accessing each of said wireless communication schemes.

### Embodiment 1:

When needing to configure RF resources after an interval, allocator 80 first accesses memory 70 to inquire the number of the requests for accessing each of the two wireless communication schemes detected by status detector 90 within the interval, and calculates the ratio R of the number of the requests for accessing TSM communication scheme to the number of the requests for accessing TD-SCDMA communication scheme. Afterwards, assumed that the number of RF carriers in a cell is N, allocator 80 allocates the number of carriers for TSM communication scheme as N1, and that of TD-SCDMA communication scheme as N2, where N1+N2=N, and calculates the value of N1/N2. Allocator 80 allocates several sets of N1 and N2 (N1 and N2 should be kept no less than 1 so as to guarantee the two wireless communication schemes accessible), and acquires the value of N1/N2 of every set of N1 and N2, and then according to the calculated ratio R, allocator 80 picks the value of N1/N2 which is closest to R, and allocates the N RF carriers to the two TSM and TD-SCDMA wireless communication schemes.

For example, the number is 3.4Erl for TSM wireless communication scheme and 8.5Erl for TD-SCDMA wireless communication scheme and N=8, then R=0.4. If 2 RF carriers are allocated to TSM wireless communication scheme and 6 to TD-SCDMA wireless communication scheme, it can be obtained that N1/N2=0.3333. If 3 RF carriers are allocated to TSM wireless communication scheme and 5 to TD-SCDMA wireless communication scheme, it can be gotten that N1/N2=0.6. As above, allocator 80 should choose the first RF carriers allocation , which is closer to R.

### Embodiment 2:

In embodiment 1, allocator 80 uses the number of the requests for accessing each of TSM and TD-SCDMA wireless communication schemes within the whole interval to calculate the traffic ratio R. However, the most important data is the data from rush hour of the interval which is most related to the block rate, so in embodiment 2 a slight revision can be taken to embodiment 1, i.e. instead of the number of the requests within the whole interval, only the number of the requests from rush hour of the interval is used to calculate the ratio R, and others are the same as embodiment 1.

### Expected Configuration method

In the prologue of evolution, TD-SCDMA subscribers will be much fewer than TSM subscribers. In this case, it will be very inefficient if RF carriers for TD-SCDMA wireless communication scheme are still reserved in each cell. Embodiment 1 of the expected configuration method in this invention is introduced to solve this problem.

### Embodiment 1:

According to the expected configuration method, all RF carriers in a cell will be allocated to TSM wireless communication scheme, a RF carrier will be allocated to TD-SCDMA wireless communication scheme only in the following cases:
(1) A TD-SCDMA subscriber sends a connection request in the cell;
(2) A TD-SCDMA subscriber moves from an adjacent cell to the cell and sends a handover request in the cell.

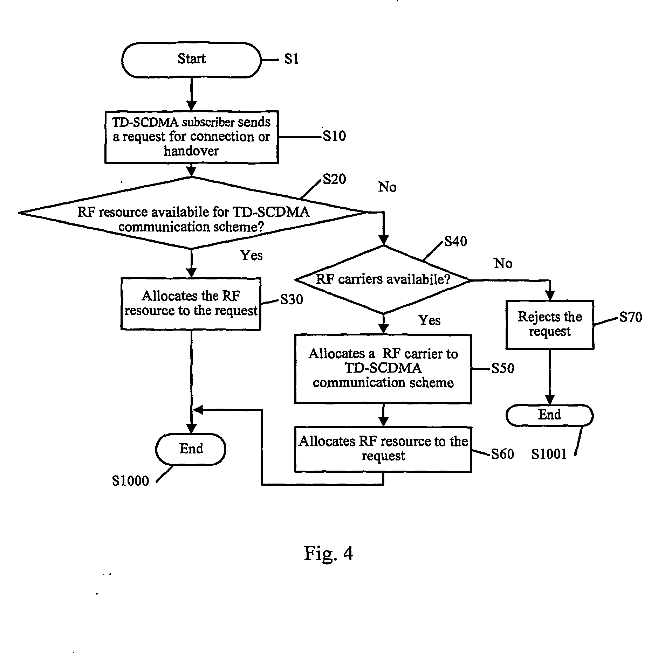

As the expected configuration method shown in Fig.4, in a cell, when there is no connection from any TD-SCDMA subscriber, all RF carriers are allocated to TSM wireless communication scheme (S1). When a TD-SCDMA subscriber in the cell sends a request for connection or handover (S 10), the base station in the cell will first judge whether there are RF resources available for TD-SCDMA wireless communication scheme (S20), the RF resources will be allocated to said request if there are RF resources available for TD-SCDMA wireless communication scheme (S30), if there are no RF resources available for TD-SCDMA wireless communication scheme, it will judge whether there are RF carriers available (S40), if there are RF carriers available , a RF carrier will be allocated to TD-SCDMA wireless communication scheme(S50) and then the RF resources corresponding to the RF carrier will be allocated to said request (S60), if there are no RF carriers available, the request will be rejected (S70) and the request will be terminated (S1001).

Once all communications of TD-SCDMA wireless communication scheme in the cell end, i.e. once there is no connection of TD-SCDMA wireless communication scheme in said cell, the RF carriers occupied by TD-SCDMA wireless communication scheme will be reallocated to TSM wireless communication scheme.

In the epilogue of evolution, the case reverses totally. Almost all subscribers are of TD-SCDMA wireless communication scheme, except for very few TSM subscribers. In this case, it can be very inefficient if RF carriers are still reserved for TSM communication in each cell. Embodiment 2 of the expected configuration method of this invention is introduced to solve this problem.

### Embodiment 2:

According to said expected configuration method, all RF carriers in a cell will be allocated to TD-SCDMA wireless communication scheme except for the following cases where one RF carrier will be allocated to TSM wireless communication scheme:
(1) A TSM subscriber sends a connection request in the cell;
(2) A TSM subscriber moves from an adjacent cell to the cell and sends a handover request in the cell.

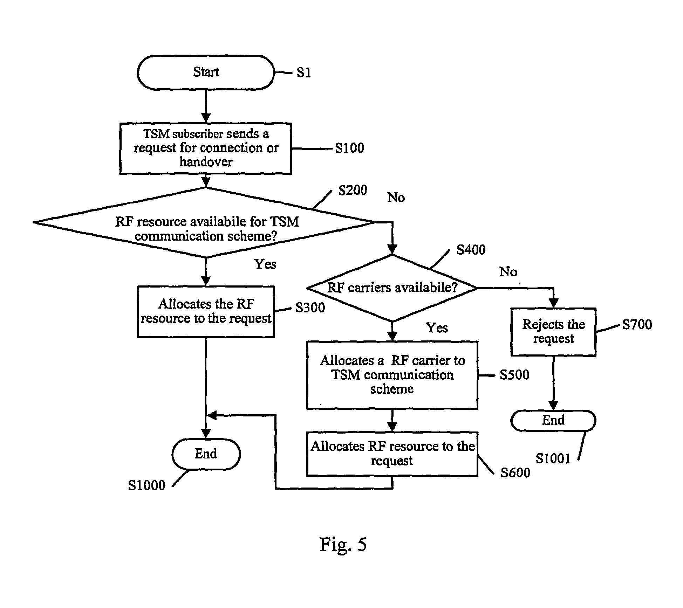

As the expected configuration method shown in Fig.5, in a cell, when there is no connection from TSM subscribers, all RF carriers are allocated to TD-SCDMA wireless communication scheme (S1). When a TSM subscriber in the cell sends a request for connection or handover (S100), the base station in the cell will first judge whether there are RF resources available for TSM wireless communication scheme (S200), if there are RF resources available for TSM wireless communication scheme, the RF resources will be allocated to said request (S300), if there are no RF resources available for TSM wireless communication scheme, it will judge whether there are RF carriers available (S400), if there are RF carriers available, a RF carrier will be allocated to TSM wireless communication scheme(S500) and then the RF resources corresponding to the RF carrier will be allocated to said request (S600), if there are no RF carriers available, the request will be rejected (S700) and the request will be terminated (S1001).

Once all communications of TSM wireless communication scheme end (S1000), i.e. once there is no connection of TSM wireless communication scheme in the cell, the RF carriers occupied by TSM wireless communication scheme will be reallocated to TD-SCDMA wireless communication scheme.

In fact, we will designate the most of the RF carriers by statistical configuration method and reserve a few carriers for expected configuration method to accommodate the rapid variation of the number of subscribers in different wireless communication schemes.

### Beneficial Use of the Invention

As to the method and apparatus provided by the present invention for allocating RF resources in multi-standard wireless communication systems, because the resource allocator of the apparatus can timely allocate RF resources shared by co-existing wireless communication schemes according to the number of the requests for accessing each of the different wireless communication schemes detected by the status detector, therefore, the method and apparatus can dynamically allocate limited RF resources to co-existing wireless communication schemes.

As to the method and apparatus provided by the present invention for allocating RF resources in multi-standard wireless communication systems, because the method and apparatus can employ statistical configuration method, expected configuration method, or their combination, according to different evolving phases of the communication system and different ratio of traffic requirements, accordingly, the method and apparatus can realize rational configuration of RF resources shared by co-existing wireless communication schemes, thus to increase the utilization of limited RF resources.

Of course, while the invention has been shown and described with respect to the preferred embodiment, it will be understood by those skilled in the art that the RF resource allocation method for multi-standard wireless communication systems provided in this invention may not be limited to the communication system with TSM or TD-SCDMA communication scheme, but also applicable to the communication systems with other wireless communication schemes.

It will also be understood by those skilled in the art that various improvements can be made to the RF resource allocation method for multi-standard wireless communication systems released in this invention. Therefore, the scope of the invention to be protected needs to be determined by what is claimed.

## Claims

1. A method for radio RF resources allocation in multi-standard wireless communication systems, comprising:
a) detecting a plurality of received signals from a uplink, wherein said signals contain information on the types of the different wireless communication schemes which are requested to access; and
b) allocating the radio RF resources shared by said different communications schemes according to said detected information, wherein step b) further includes:
b1) carrying out a statistic of the information on the requests for accessing each of said different wireless communication schemes in a set interval; and
b2) allocating said RF resources shared by said different wireless communication schemes according to said statistic of the set interval, and
wherein said information on the requests for accessing each of said different wireless communication schemes includes the number of the requests for accessing each of said different wireless communication schemes for calculating a traffic ratio.

2. The method of claim 1, wherein in step b2), the traffic ratio is realized by calculating the ratio of the number of the requests for accessing each of said different wireless communication schemes.

3. The method of claim 1 or 2, wherein in step b1), said statistic is achieved by carrying out a statistic of said information on the requests for accessing each of said different wireless communication schemes within the set whole interval.

4. The method of claims 1 or 2, wherein in step b1), said statistic is achieved by carrying out a statistic of said information on the requests for accessing each of said different wireless communication schemes within rush hours of the set interval.

5. The method of any of claims 1-4, wherein step b) further includes:
b2) judging whether there are RF resources available for the requests for accessing said different wireless communication schemes; and
b3) allocating said available RF resources to said requests, if there are RF resources available for said requests.

6. The method of any of claims 1-4, wherein step b) further includes:
b1) pre-allocating said RF resources to a specific communication scheme;
b2) judging whether there are RF resources available for the requests for accessing the different wireless communication schemes, if the different wireless communication schemes are not the specific communication scheme; and
b3) allocating said available RF resources to said requests, if there are RF resources available for said requests.

7. The method of claim 5 or 6, wherein step b2) and b3) are executed in following condition:
subscribers send connection requests for accessing said different wireless communication schemes.

8. The method of claim 5 or 6, wherein step b2) and b3) are executed in following condition:
subscribers which carry out cell handover send handover requests for accessing said different wireless communication schemes.

9. The method of any of claims 5-8, wherein step b3) further includes:
i) judging whether there are RF carrier available for said requests, if there are no RF resources available for said requests for accessing said wireless communication schemes; and
ii) allocating said available RF carrier to said wireless communication schemes, if there are RF carriers available for said requests, and allocating the corresponding RF resources to said requests.

10. The method of claim 9, wherein step ii) further includes:
when the communications employing said wireless communication schemes ends , said RF carriers allocated to said requests are released.

11. The method of claim 9 or 10, wherein step ii) further includes:
if there are no RF carriers available for said requests, said requests are rejected.

12. The method of any of claims 1-11, said wireless communication schemes include at least two of following: IS-95, CDMA, GSM, TSM, GPRS, TD-SCDMA, W-CDMA cdma 2000 and WLAN.

13. A device for RF resources allocation in multi-standard wireless communication systems, comprising:
a status detector (90) adapted to detect a plurality of received signals from a uplink, wherein said signals contain information on the types of the different wireless communication schemes which are requested to access; and
a resource allocator (80) adapted to allocate the RF resources shared by said different communications schemes according to said detected information, wherein said resource allocator (80) is adapted to allocate said RF resources according to a statistic of the information on the requests for accessing each of said different communications schemes in a set interval, and
wherein said information on the requests for accessing each of said different communications schemes includes the number of the requests for accessing each of said different communications schemes for calculating a traffic ratio.

14. The device of claim 13, wherein said resource allocator (80) is adapted to realize the traffic ratio by calculating the ratio of the number of the requests for accessing each of said different wireless communication schemes.

15. The device of claim 13 or 14, wherein said statistic is achieved by carrying out a statistic of said information on the requests for accessing each of said different wireless communication schemes within the set whole interval.

16. The device of claim 13 or 14, wherein, said statistic is achieved by carrying out a statistic of said information on requests for accessing each of said different wireless communication schemes within rush hours of the set interval.

17. The device of any of claims 13-16, wherein said RF resources allocation executed by said resource allocator (80) includes:
b) judging whether there are RF resources available for the requests for accessing said different wireless communication schemes; and
c) allocating said available RF resources to said requests, if there are RF resources available for said requests.

18. the device of any of claims 13-16, wherein said RF resources allocation executed by said resource allocator (80) includes:
a) pre-allocating said RF resources to a specific communication scheme;
b) judging whether there are RF resources available for the requests for accessing the different wireless communication schemes, if the different wireless communication schemes are not the specific communication scheme; and
c) allocating said available RF resources to said requests, if there are RF resources available for said requests.

19. The device of claim 17 or 18, wherein step b) and c) are executed in following condition:
subscribers send connection requests for accessing the different wireless communication schemes.

20. The device of claim 17 or 18, wherein step b) and c) are executed in following condition:
subscribers which carry out cell handover send handover requests for accessing the different wireless communication schemes.

21. The device of any of claims 17-20, wherein said RF resources allocation executed by said resource allocator (80) includes:
judging whether there are RF carriers available for said requests for accessing the different wireless communication schemes, if there are no RF resources available for said requests; and
allocating said available RF carriers to the different wireless communication schemes, if there are RF carriers available for said requests, and allocating the corresponding RF resources to said requests.

22. The device of claim 21, wherein said RF resources allocation executed by said resource allocator (80) includes:
when the communications employing said different wireless communication schemes end, said RF carriers allocated to said requests are released.

23. The device of claim 21 or 22, wherein said RF resources allocation executed by said resources allocator (80) includes:
if there are no RF carriers available for said requests, said requests are rejected.

24. The device of any of claims 13-23, said different wireless communication schemes include at least two of following: IS-95, CDMA, GSM, TSM, GPRS, TD-SCDMA, W-CDMA, cdma 2000 and WLAN.

25. A wireless communication system, comprising:
a plurality of transceivers (30) adapted to receive and transmit RF signals;
a plurality of RF processing units (40) adapted to process said received signals or signals to be transmitted by said transceivers;
status detector (90) adapted to detect the information contained in received signals from a uplink on the types of the different wireless communication schemes which are requested to access, and RF resources allocator (80) adapted to allocate RF resources shared by said different communications schemes according to said detected information, wherein said RF resources allocator (80) is adapted to allocate said RF resources according to a statistic of the information on the requests for accessing each of said different wireless communication schemes within a set interval, and wherein said information on the requests for accessing each of said different wireless communication schemes includes the number of the requests for accessing each of said different wireless communication schemes for calculating a traffic ratio.

26. The system of claim 25, wherein said RF resources allocator (80) is adapted to realize the traffic ratio by calculating the ratio of the number of the requests for accessing each of said different wireless communication schemes.

27. The system of claim 25 or 26, wherein said statistic is achieved by carrying out a statistic of said information on the requests for accessing each of said different wireless communication schemes within the set whole interval.

28. The system of claim 25 or 26, wherein, said statistic is achieved by carrying out a statistic of said information on the requests for accessing each of said different wireless communication schemes within rush hours of the set interval.

29. The system of any of claims 25-28, wherein said RF resources allocation executed by said RF resources allocator (80) includes:
b) judging whether there are RF resources available for the requests for accessing said different wireless communication schemes; and
c) allocating said available RF resources to said requests, if there are RF resources available for said requests.

30. The system of any of claims 25-28, wherein said RF resources allocation executed by said RF resources resources allocator (80) includes:
a) pre-allocating said RF resources to a specific communication scheme;
b) judging whether there are RF resources available for the requests for accessing the different wireless communication schemes, if the different wireless communication schemes are not the specific communication scheme; and
c) allocating said available RF resources to said requests, if there are RF resources available for said requests.

31. The system of claim 29 or 30, wherein step b) and c) are executed in following condition:
subscribers send connection requests for accessing the different wireless communication schemes.

32. The system of claim 29 or 30, wherein step b) and c) are executed in following condition:
subscribers which carry out cell handover send handover requests for accessing the different wireless communication schemes.

33. The system of any of claims 29-32, wherein said RF resources allocation executed by said RF resources allocator (80) includes:
judging whether there are RF carriers available for said requests for accessing the different wireless communication schemes, if there are no RF resources available for said requests; and
allocating said available RF carriers to the different wireless communication schemes, if there are RF carriers available for said requests, and allocating the corresponding RF resources to said requests.

34. The system of claim 33, wherein said RF resources allocation executed by said RF resources allocator (80) includes:
when the communications employing said different wireless communication schemes end, said RF carriers allocated to said requests are released.

35. The system of claim 33 or 34, wherein said RF resources allocation executed by said RF resources allocator (80) includes:
if there are no RF carriers available for said requests, said requests are rejected.

36. The system of any of claims 25-35, said different wireless communication schemes include at least two of following: IS-95, CDMA, GSM, TSM, GPRS, TD-SCDMA, W-CDMA, cdma 2000 and WLAN.

## Patentansprüche

1. Verfahren zur Funkressourcenzuordnung in drahtlosen Multistandard-Kommunikationssystemen, wobei dieses Verfahren die nachfolgenden Verfahrensschritte umfasst:
a) das Detektieren einer Anzahl empfangener Signale aus einer Aufwärtsstrecke, wobei die genannten Signale Information über die Typen der verschiedenen drahtlosen Kommunikationsschemen enthalten, auf die beantragt wird, zuzugreifen; und
b) das Zuordnen der Funkressourcen, die von den verschiedenen Kommunikationsschemen entsprechend der genannten detektierten Information gemeinsam benutzt werden, wobei der Schritt b) weiterhin Folgendes umfasst:
b1) das Durchführen einer Statistik der Information über die Anträge zum Zugreifen auf jedes der genannten verschiedenen drahtlosen Kommunikationsschemen in einem festgelegten Intervall; und
b2) das Zuordnen der genannten Funkressourcen, die von den genannten verschiedenen drahtlosen Kommunikationsschemen entsprechend der genannten Statistik des festgelegten Intervalls gemeinsam benutzt werden, und
wobei die genannte Information über die Anträge zum Zugreifen auf jedes der genannten verschiedenen drahtlosen Kommunikationsschemen die Anzahl Anträge zum Zugreifen auf jedes der genannten verschiedenen drahtlosen Kommunikationsschemen zur Berechnung eines Verkehrsanteils umfasst.

2. Verfahren nach Anspruch 1, wobei in dem Verfahrensschritt b2) der Verkehrsanteil durch Berechnung des Anteils der Anzahl Anträge zum Zugreifen auf jedes der genannten verschiedenen drahtlosen Kommunikationsschemen verwirklicht wird.

3. Verfahren nach Anspruch 1 oder 2, wobei in dem Schritt b1) die genannte Statistik durch Durchführung einer Statistik der genannten Information über die Anträge zum Zugreifen auf jedes der genannten verschiedenen drahtlosen Kommunikationsschemen innerhalb des festgelegten ganzen Intervalls erreicht wird.

4. Verfahren nach Anspruch 1 oder 2, wobei in dem Verfahrensschritt b1) die genannte Statistik durch Durchführung einer Statistik der genannten Information über die Anträge zum Zugreifen auf jedes der genannten verschiedenen drahtlosen Kommunikationsschemen in Hauptverkehrszeiten des festgelegten Intervalls erreicht wird.

5. Verfahren nach einem der Ansprüche 1-4, wobei der Verfahrensschritt b) weiterhin Folgendes umfasst:
b2) das Beurteilen, ob für die Anträge zum Zugreifen auf die genannten verschiedenen drahtlosen Kommunikationsschemen Funkressourcen verfügbar sind; und
b3) das Zuordnen der genannten verfügbaren Funkressourcen zu den genannten Anträgen, falls für die genannten Anträge Funkressourcen verfügbar sind.

6. Verfahren nach einem der Ansprüche 1-4, wobei der Verfahrensschritt b) weiterhin Folgendes umfasst:
b1) das Vorzuordnen der genannten Funkressourcen zu einem bestimmten Kommunikationsschema;
b2) das Beurteilen, ob für die Anträge zum Zugreifen auf die genannten verschiedenen drahtlosen Kommunikationsschemen Funkressourcen verfügbar sind, falls die verschiedenen drahtlosen Kommunikationsschemen nicht das bestimmte Kommunikationsschema sind; und
b3) das Zuordnen der genannten verfügbaren Funkressourcen zu den genannten Anträgen, falls für die genannten Anträge Funkressourcen verfügbar sind.

7. Verfahren nach Anspruch 5 oder 6, wobei der Verfahrensschritt b2) und b3) unter den nachfolgenden Bedingungen durchgeführt werden:
Abonnenten senden Verbindungsanträge zum Zugreifen auf die genannten verschiedenen drahtlosen Kommunikationsschemen.

8. Verfahren nach Anspruch 5 oder 6, wobei der Verfahrensschritt b2) und b3) unter den nachfolgenden Bedingungen durchgeführt werden:
Abonnenten, die Zellenübergabe durchführen, senden Übergabeanträge zum Zugreifen auf die genannten verschiedenen drahtlosen Kommunikationsschemen.

9. Verfahren nach einem der Ansprüche 5-8, wobei der Verfahrensschritt b3) weiterhin Folgendes umfasst:
i) das Beurteilen, ob für die genannten Anträge Funkträger verfügbar sind, wenn für die genannten Anträge zum Zugreifen auf die genannten drahtlosen Kommunikationsschemen keine Funkressourcen verfügbar sind; und
ii) das Zuordnen des genannten verfügbaren Funkträgers zu den genannten drahtlosen Kommunikationsschemen, wenn für die genannten Anträge Funkträger verfügbar sind, und das Zuordnen der entsprechenden Funkressourcen zu den genannten Anträgen.

10. Verfahren nach Anspruch 9, wobei der Verfahrensschritt ii) weiterhin Folgendes umfasst:
wenn die Kommunikation, welche die genannten drahtlosen Kommunikationsschemen benutzt endet, werden die genannten den genannten Anträgen zugeordneten Funkträger freigegeben.

11. Verfahren nach Anspruch 9 oder 10, wobei der Verfahrensschritt ii) weiterhin Folgendes umfasst:
falls für die genannten Anträge keine Funkträger verfügbar sind, werden die genannten Anträge zurückgewiesen.

12. Verfahren nach einem der Ansprüche 1-11, wobei die genannten drahtlosen Kommunikationsschemen wenigstens zwei Stück der nachfolgenden Elemente enthalten: IS-95, CDMA, GSM, TSM, GPRS, TD-SCDMA, W-CDMA, cdma 2000 und WLAN.

13. Anordnung zur Funkressourcenzuordnung in drahtlosen Multistandard-Kommunikationssystemen, wobei diese Anordnung Folgendes umfasst:
einen Zustandsdetektor (90), vorgesehen zum Detektieren einer Anzahl empfangener Signale von einer Aufwärtsstrecke, wobei die genannten Signale Information über die Typen der verschiedenen drahtlosen Kommunikationsschemen enthalten, auf die beantragt wird, zuzugreifen; und
einen Ressourcenzuteiler (80), vorgesehen zum Zuordnen der Funkressourcen, die von den verschiedenen Kommunikationsschemen entsprechend der genannten detektierten Information gemeinsam benutzt werden, wobei der genannte Ressourcenzuteiler (80) dazu vorgesehen ist, die genannten Funkressourcen entsprechend einer Statistik der Information über die Anträge zum Zugreifen auf jedes der genannten verschiedenen drahtlosen Kommunikationsschemen in einem festgelegten Intervall zuzuordnen, und
wobei die genannte Information über die Anträge zum Zugreifen auf jedes der genannten verschiedenen Kommunikationsschemen die Anzahl Anträge zum Zugreifen auf jedes der genannten verschiedenen Kommunikationsschemen zum Berechnen eines Verkehrsanteils umfasst.

14. Anordnung nach Anspruch 13, wobei der genannte Ressourcenzuteiler (80) dazu vorgesehen ist, den Verkehrsanteil durch Berechnung des Anteils der Anzahl Anträge zum Zugreifen auf jedes der genannten verschiedenen drahtlosen Kommunikationsschemen zu verwirklichen.

15. Anordnung nach Anspruch 13 oder 14, wobei die genannte Statistik durch Durchführung einer Statistik der genannten Information über die Anträge zum Zugreifen auf jedes der genannten verschiedenen drahtlosen Kommunikationsschemen innerhalb des festgelegten ganzen Intervalls erreicht wird.

16. Anordnung nach Anspruch 13 oder 14, wobei die genannte Statistik durch Durchführung einer Statistik der genannten Information über Anträge zum Zugreifen auf jedes der genannten verschiedenen drahtlosen Kommunikationsschemen in Hauptverkehrszeiten des festgelegten Intervalls erreicht wird.

17. Anordnung nach einem der Ansprüche 13-16, wobei die genannte durch den genannten Ressourcenzuteiler (80) durchgeführte Funkressourcenzuordnung Folgendes umfasst:
b) das Beurteilen, ob für die Anträge zum Zugreifen auf die genannten verschiedenen drahtlosen Kommunikationsschemen Funkressourcen verfügbar sind; und
c) das Zuordnen der genannten verfügbaren Funkressourcen zu den genannten Anträgen, falls für die genannten Anträge Funkressourcen verfügbar sind.

18. Anordnung nach einem der Ansprüche 13-16, wobei die genannte durch den genannten Ressourcenzuteiler (80) durchgeführte Funkressourcenzuordnung Folgendes umfasst:
a) Vorzuordnung der genannten Funkressourcen zu einem bestimmten Kommunikationsschema;
b) Beurteilung, ob für die Anträge zum Zugreifen auf die verschiedenen drahtlosen Kommunikationsschemen Funkressourcen verfügbar sind, falls die verschiedenen drahtlosen Kommunikationsschemen nicht das bestimmte Kommunikationsschema sind; und
c) Zuordnung der genannten verfügbaren Funkressourcen zu den genannten Anträgen, falls für die genannten Anträge Funkressourcen verfügbar sind.

19. Anordnung nach Anspruch 17 oder 18, wobei der Verfahrensschritt b) und c) unter der nachfolgenden Bedingung durchgeführt werden:
Abonnenten senden Verbindungsanträge zum Zugreifen auf die verschiedenen drahtlosen Kommunikationsschemen.

20. Anordnung nach Anspruch 17 oder 18, wobei der Verfahrensschritt b) und c) unter der nachfolgenden Bedingung durchgeführt werden:
Abonnenten, die Zellenübergabe durchführen, senden Übergabeanträge zum Zugreifen auf die genannten verschiedenen drahtlosen Kommunikationsschemen.

21. Anordnung nach einem der Ansprüche 17-20, wobei die durch den genannten Ressourcenzuteiler (80) durchgeführte genannte Funkressourcenzuordnung Folgendes umfasst:
Beurteilung, ob für die genannten Anträge zum Zugreifen auf die genannten verschiedenen drahtlosen Kommunikationsschemen Funkträger verfügbar sind; und
Zuordnung der genannten verfügbaren Funkressourcen zu den genannten Anträgen, falls für die genannten Anträge Funkträger verfügbar sind.

22. Anordnung nach Anspruch 21, wobei die genannte durch den genannten Ressourcenzuteiler (80) durchgeführte Funkressourcenzuordnung Folgendes umfasst:
wenn die Kommunikationen, welche die genannten verschiedenen drahtlosen Kommunikationsschemen benutzen, enden, werden die genannten den gennannten Anträgen zugeordneten Funkträger freigegeben.

23. Anordnung nach Anspruch 21 oder 22, wobei die genannte durch den genannten Ressourcenzuteiler (80) durchgeführte Funkressourcenzuordnung Folgendes umfasst:
falls für die genannten Anträge keine Funkträger verfügbar sind, werden die genannten Anträge zurückgewiesen.

24. Anordnung nach einem der Ansprüche 13-23, wobei die genannten verschiedenen drahtlosen Kommunikationsschemen wenigstens zwei Stück der nachfolgenden Elemente enthalten: IS-95, CDMA, GSM, TSM, GPRS, TD-SCDMA, W-CDMA, cdma 2000 und WLAN.

25. Drahtloses Kommunikationssystem, das Folgendes umfasst:
eine Anzahl Transceiver (30), vorgesehen zum Empfangen und Übertragen von Funksignalen;
eine Anzahl Funkverarbeitungseinheiten (40), vorgesehen zum Verarbeiten der genannten empfangenen Signale oder zum verarbeiten von den genannten Transceivem zu übertragenden Signale;
einen Zustandsdetektor (90), vorgesehen zum Detektieren der Information in den empfangenen Signalen von einer Aufwärtsstrecke über die Typen der verschiedenen drahtlosen Kommunikationsschemen, worauf zuzugreifen beantragt wird, und einen Funkressourcenzuteiler (80), vorgesehen zum Zuordnen von Funkressourcen, die entsprechend der genannten detektierten Information gemeinsam benutzt werden, wobei der genannte Ressourcenzuteiler (80) dazu vorgesehen ist, die genannten Funkressourcen entsprechend einer Statistik der Information über die Anträge zum Zugreifen auf jedes der genannten verschiedenen drahtlosen Kommunikationsschemen in einem festgelegten Intervall zuzuordnen; und wobei die genannte Information über die Anträge zum Zugreifen auf jedes der genannten verschiedenen Kommunikationsschemen die Anzahl Anträge zum Zugreifen auf jedes der genannten verschiedenen Kommunikationsschemen zum Berechnen eines Verkehrsanteils umfasst.

26. System nach Anspruch 25, wobei der genannte Funkressourcenzuteiler (80) dazu vorgesehen ist, den Verkehrsanteil durch Berechnung des Anteils der Anzahl Anträge zum Zugreifen auf jedes der genannten verschiedenen drahtlosen Kommunikationsschemen zu verwirklichen.

27. System nach Anspruch 25 oder 26, wobei die genannte Statistik durch Durchführung einer Statistik der genannten Information über die Anträge zum Zugreifen auf jedes der genannten verschiedenen drahtlosen Kommunikationsschemen innerhalb des festgelegten ganzen Intervalls erreicht wird.

28. System nach Anspruch 25 oder 26, wobei die genannte Statistik durch Durchführung einer Statistik der genannten Information über Anträge zum Zugreifen auf jedes der genannten verschiedenen drahtlosen Kommunikationsschemen in Hauptverkehrszeiten des festgelegten Intervalls erreicht wird.

29. System nach einem der Ansprüche 25-28, wobei die genannte durch den genannten Funkressourcenzuteiler (80) durchgeführte Funkressourcenzuteilung Folgendes umfasst:
b) Beurteilung, ob für die Anträge zum Zugreifen auf die genannten verschiedenen drahtlosen Kommunikationsschemen Funkressourcen verfügbar sind; und
c) Zuordnung der genannten verfügbaren Funkressourcen zu den genannten Anträgen, falls für die genannten Anträge Funkressourcen verfügbar sind.

30. System nach einem der Ansprüche 25-28, wobei die genannte durch den genannten Ressourcenzuteiler (80) durchgeführte Funkressourcenzuordnung Folgendes umfasst:
a) Vorzuordnung der genannten Funkressourcen zu einem bestimmten Kommunikationsschema;
b) Beurteilung, ob für die Anträge zum Zugreifen auf die verschiedenen drahtlosen Kommunikationsschemen Funkressourcen verfügbar sind, falls die verschiedenen drahtlosen Kommunikationsschemen nicht das bestimmte Kommunikationsschema sind; und
c) Zuordnung der genannten verfügbaren Funkressourcen zu den genannten Anträgen, falls für die genannten Anträge Funkressourcen verfügbar sind.

31. System nach Anspruch 29 oder 30, wobei der Verfahrensschritt b) und c) unter der nachfolgenden Bedingung durchgeführt werden:
Abonnenten senden Verbindungsanträge zum Zugreifen auf die verschiedenen drahtlosen Kommunikationsschemen.

32. System nach Anspruch 29 oder 30, wobei der Verfahrensschritt b) und c) unter der nachfolgenden Bedingung durchgeführt werden:
Abonnenten, die Zellenübergabe durchführen, senden Übergabeanträge zum Zugreifen auf die genannten verschiedenen drahtlosen Kommunikationsschemen.

33. System nach einem der Ansprüche 29-32, wobei die durch den genannten Ressourcenzuteiler (80) durchgeführte genannte Funkressourcenzuordnung Folgendes umfasst:
Beurteilung, ob für die genannten Anträge zum Zugreifen auf die genannten verschiedenen drahtlosen Kommunikationsschemen Funkträger verfügbar sind, falls für die genannten Anträge keine Funkressourcen verfügbar sind; und
Zuordnung der genannten verfügbaren Funkträger zu den verschiedenen drahtlosen Kommunikationsschemen, falls für die genannten Anträge Funkträger verfügbar sind, und Zuordnung der entsprechenden Funkressourcen zu den genannten Anträgen.

34. System nach Anspruch 33, wobei die genannte durch den genannten Funkressourcenzuteiler (80) durchgeführte Funkressourcenzuordnung Folgendes umfasst:
wenn die Kommunikationen, welche die genannten verschiedenen drahtlosen Kommunikationsschemen benutzen, enden, werden die genannten den gennannten Anträgen zugeordneten Funkträger freigegeben.

35. System nach Anspruch 33 oder 34, wobei die genannte durch den genannten Ressourcenzuteiler (80) durchgeführte Funkressourcenzuordnung Folgendes umfasst:
falls für die genannten Anträge keine Funkträger verfügbar sind, werden die genannten Anträge zurückgewiesen.

36. System nach einem der Ansprüche 25-35, wobei die genannten verschiedenen drahtlosen Kommunikationsschemen wenigstens zwei Stück der nachfolgenden Elemente enthalten: IS-95, CDMA, GSM, TSM, GPRS, TD-SCDMA, W-CDMA, cdma 2000 und WLAN.

## Revendications

1. Procédé pour l'allocation de ressources radio RF dans des systèmes de communication sans fil multistandards, comprenant les étapes suivantes consistant à :
a) détecter une pluralité de signaux reçus à partir d'une liaison ascendante, dans lequel lesdits signaux contiennent de l'information sur les types des schémas de communication sans fil différents qui sont demandés pour l'accès ; et
b) allouer les ressources radio RF qui sont partagées par lesdits schémas de communication différents selon ladite information détectée, dans lequel l'étape (b) comprend en outre les étapes suivantes consistant à :
b1) réaliser une statistique de l'information sur les demandes pour accéder à chacun desdits schémas de communication sans fil différents dans un intervalle défini ; et
b2) allouer lesdites ressources RF qui sont partagées par lesdits schémas de communication sans fil différents selon ladite statistique de l'intervalle défini, et
dans lequel ladite information sur les demandes pour accéder à chacun desdits schémas de communication sans fil différents comprend le nombre des demandes pour accéder à chacun desdits schémas de communication sans fil différents afin de calculer un rapport de trafic.

2. Procédé selon la revendication 1, dans lequel, dans l'étape b2, le rapport de trafic est réalisé par le calcul du rapport du nombre des demandes pour accéder à chacun desdits schémas de communication sans fil différents.

3. Procédé selon la revendication 1 ou selon la revendication 2, dans lequel, dans l'étape b1), ladite statistique est obtenue par la réalisation d'une statistique de ladite information sur les demandes pour accéder à chacun desdits schémas de communication sans fil différents dans tout l'intervalle défini.

4. Procédé selon la revendication 1 ou selon la revendication 2, dans lequel, dans l'étape b1), ladite statistique est obtenue par la réalisation d'une statistique de ladite information sur les demandes pour accéder à chacun desdits schémas de communication sans fil différents dans les heures de pointe de l'intervalle défini.

5. Procédé selon l'une quelconque des revendications précédentes 1 à 4, dans lequel l'étape b) comprend en outre les étapes suivantes consistant à :
b2) juger s'il y a des ressources RF disponibles pour les demandes pour accéder audits schémas de communication sans fil différents ; et
b3) allouer lesdites ressources RF disponibles audites demandes s'il y a des ressources RF disponibles pour lesdites demandes.

6. Procédé selon l'une quelconque des revendications précédentes 1 à 4, dans lequel l'étape b) comprend en outre les étapes suivantes consistant à :
b1) allouer préliminairement lesdites ressources RF à un schéma de communication spécifique ;
b2) juger s'il y a des ressources RF disponibles pour les demandes pour accéder aux schémas de communication sans fil différents pourvu que les schémas de communication sans fil différents ne soient pas le schéma de communication spécifique ; et
b3) allouer lesdites ressources RF disponibles audites demandes s'il y a des ressources RF disponibles pour lesdites demandes.

7. Procédé selon la revendication 5 ou selon la revendication 6, dans lequel l'étape b2) et l'étape b3) sont exécutées dans la condition suivante :
des abonnés envoient des demandes de connexion pour accéder audits schémas de communication sans fil différents.

8. Procédé selon la revendication 5 ou selon la revendication 6, dans lequel l'étape b2) et l'étape b3) sont exécutées dans la condition suivante :
des abonnés qui effectuent le transfert cellulaire envoient des demandes de transfert pour accéder audits schémas de communication sans fil différents.

9. Procédé selon l'une quelconque des revendications précédentes 5 à 8, dans lequel l'étape b3) comprend en outre les étapes suivantes consistant à :
i) juger s'il y a une porteuse RF disponible pour lesdites demandes pourvu qu'il n'y ait pas de ressources RF disponibles pour lesdites demandes pour accéder audits schémas de communication sans fil ; et
ii) allouer ladite porteuse RF disponible audits schémas de communication s'il y a des porteuses RF disponibles pour lesdites demandes et allouer les ressources RF correspondantes audites demandes.

10. Procédé selon la revendication 9, dans lequel l'étape ii) comprend en outre ce qui suit :
lorsque les communications utilisant lesdits schémas de communication sans fil se terminent, lesdites porteuses RF qui sont allouées audites demandes sont dégagées.

11. Procédé selon la revendication 9 ou selon la revendication 10, dans lequel l'étape ii) comprend en outre ce qui suit :
s'il n'y a pas de porteuses RF disponibles pour lesdites demandes, lesdites demandes sont rejetées.

12. Procédé selon l'une quelconque des revendications précédentes 1 à 11, dans lequel lesdits schémas de communication sans fil comprennent au moins deux des opérations suivantes : IS-95, CDMA, GSM, TSM, GPRS, TD-SCDMA, W-CDMA, cdma 2000 et WLAN.

13. Dispositif pour l'allocation de ressources RF dans des systèmes de communication sans fil multistandards, comprenant :
un détecteur d'état (90) qui est adapté de manière à détecter une pluralité de signaux reçus à partir d'une liaison ascendante, dans lequel lesdits signaux contiennent de l'information sur les types des schémas de communication sans fil différents qui sont demandés pour l'accès ; et
un allocateur de ressources (80) qui est adapté de manière à allouer les ressources RF qui sont partagées par lesdits schémas de communication différents selon ladite information détectée, dans lequel ledit allocateur de ressources (80) est adapté de manière à allouer lesdites ressources RF selon une statistique de l'information sur les demandes pour accéder à chacun desdits schémas de communication différents dans un intervalle défini, et
dans lequel ladite information sur les demandes pour accéder à chacun desdits schémas de communication différents comprend le nombre des demandes pour accéder à chacun desdits schémas de communication différents afin de calculer un rapport de trafic.

14. Dispositif selon la revendication 13, dans lequel ledit allocateur de ressources (80) est adapté de manière à réaliser le rapport de trafic par le calcul du rapport du nombre des demandes pour accéder à chacun desdits schémas de communication sans fil différents.

15. Dispositif selon la revendication 13 ou selon la revendication 14, dans lequel ladite statistique est obtenue par la réalisation d'une statistique de ladite information sur les demandes pour accéder à chacun desdits schémas de communication sans fil différents dans tout l'intervalle défini.

16. Dispositif selon la revendication 13 ou selon la revendication 14, dans lequel ladite statistique est obtenue par la réalisation d'une statistique de ladite information sur les demandes pour accéder à chacun desdits schémas de communication sans fil différents dans des heures de pointe de l'intervalle défini.

17. Dispositif selon l'une quelconque des revendications précédentes 13 à 16, dans lequel ladite allocation de ressources RF qui est exécutée par ledit allocateur de ressources (80) comprend les étapes suivantes consistant à :
b) juger s'il y a des ressources RF disponibles pour les demandes pour accéder audits schémas de communication sans fil différents ; et
c) allouer lesdites ressources RF disponibles audites demandes s'il y a des ressources RF disponibles pour lesdites demandes.

18. Dispositif selon l'une quelconque des revendications précédentes 13 à 16, dans lequel ladite allocation de ressources RF qui est exécutée par ledit allocateur de ressources (80) comprend les étapes suivantes consistant à :
a) allouer préliminairement lesdites ressources RF à un schéma de communication spécifique ;
b) juger s'il y a des ressources RF disponibles pour les demandes pour accéder aux schémas de communication sans fil différents pourvu que les schémas de communication sans fil différents ne soient pas le schéma de communication spécifique ; et
c) allouer lesdites ressources RF disponibles audites demandes s'il y a des ressources RF disponibles pour lesdites demandes.

19. Dispositif selon la revendication 17 ou selon la revendication 18, dans lequel l'étape b) et l'étape c) sont exécutées dans la condition suivante :
des abonnés envoient des demandes de connexion pour accéder audits schémas de communication sans fil différents.

20. Dispositif selon la revendication 17 ou selon la revendication 18, dans lequel l'étape b) et l'étape c) sont exécutées dans la condition suivante :
des abonnés qui effectuent le transfert cellulaire envoient des demandes de transfert pour accéder audits schémas de communication sans fil différents.

21. Dispositif selon l'une quelconque des revendications précédentes 17 à 20, dans lequel ladite allocation de ressources RF qui est exécutée par ledit allocateur de ressources (80) comprend les étapes suivantes consistant à :
juger s'il y a des porteuses RF disponibles pour lesdites demandes pour accéder aux schémas de communication sans fil différents pourvu qu'il n'y ait pas de ressources RF disponibles pour lesdites demandes ; et
allouer lesdites porteuses RF disponibles audits schémas de communication sans fil différents s'il y a des porteuses RF disponibles pour lesdites demandes et allouer les ressources RF correspondantes audites demandes.

22. Dispositif selon la revendication 1, dans lequel ladite allocation de ressources RF qui est exécutée par ledit allocateur de ressources (80) comprend ce qui suit :
lorsque les communications utilisant lesdits schémas de communication sans fil différents se terminent, lesdites porteuses RF qui sont allouées audites demandes sont dégagées.

23. Dispositif selon la revendication 21 ou selon la revendication 22, dans lequel ladite allocation de ressources RF qui est exécutée par ledit allocateur de ressources (80) comprend ce qui suit :
s'il n'y a pas de porteuses RF disponibles pour lesdites demandes, lesdites demandes sont rejetées.

24. Dispositif selon l'une quelconque des revendications précédentes 13 à 23, dans lequel lesdits schémas de communication sans fil différents comprennent au moins deux des opérations suivantes : IS-95, CDMA, GSM, TSM, GPRS, TD-SCDMA, W-CDMA, cdma 2000 et WLAN.

25. Système de communication sans fil, comprenant :
une pluralité d'émetteurs-récepteurs (30) qui sont adaptés de manière à recevoir et à transmettre des signaux RF ;
une pluralité d'unités de traitement RF (40) qui sont adaptées de manière à traiter lesdits signaux reçus ou des signaux à transmettre par lesdits émetteurs-récepteurs ;
détecteur d'état (90) qui est adapté de manière à détecter l'information qui est contenue dans des signaux reçus à partir d'une liaison ascendante sur les types des schémas de communication sans fil différents qui sont demandés pour l'accès et l'allocateur de ressources RF (80) qui est adapté de manière à allouer des ressources RF qui sont partagées par lesdits schémas de communication différents selon ladite information détectée, dans lequel ledit allocateur de ressources RF (80) est adapté de manière à allouer lesdites ressources RF selon une statistique de l'information sur les demandes pour accéder à chacun desdits schémas de communication sans fil différents dans un intervalle défini et dans lequel ladite information sur les demandes pour accéder à chacun desdits schémas de communication sans fil différents comprend le nombre des demandes pour accéder à chacun desdits schémas de communication sans fil différents pour calculer un rapport de trafic.

26. Système selon la revendication 25, dans lequel ledit allocateur de ressources RF (80) est adapté de manière à réaliser le rapport de trafic par le calcul du rapport du nombre des demandes pour accéder à chacun desdits schémas de communication sans fil différents.

27. Système selon la revendication 25 ou selon la revendication 26, dans lequel ladite statistique est obtenue par la réalisation d'une statistique de ladite information sur les demandes pour accéder à chacun desdits schémas de communication sans fil différents dans tout l'intervalle défini.

28. Système selon la revendication 25 ou selon la revendication 26, dans lequel ladite statistique est obtenue par la réalisation d'une statistique de ladite information sur les demandes pour accéder à chacun desdits schémas de communication sans fil différents dans des heures de pointe de l'intervalle défini.

29. Système selon l'une quelconque des revendications précédentes 25 à 28, dans lequel ladite allocation de ressources RF qui est exécutée par ledit allocateur de ressources (80) comprend les étapes suivantes consistant à :
b) juger s'il y a des ressources RF disponibles pour les demandes pour accéder audits schémas de communication sans fil différents ; et
c) allouer lesdites ressources RF disponibles audites demandes s'il y a des ressources RF disponibles pour lesdites demandes.

30. Système selon l'une quelconque des revendications précédentes 25 à 28, dans lequel ladite allocation de ressources RF qui est exécutée par ledit allocateur de ressources (80) comprend les étapes suivantes consistant à :
a) allouer préliminairement lesdites ressources RF à un schéma de communication spécifique ;
b) juger s'il y a des ressources RF disponibles pour les demandes pour accéder aux schémas de communication sans fil différents pourvu que les schémas de communication sans fil différents ne soient pas le schéma de communication spécifique ; et
c) allouer lesdites ressources RF disponibles audites demandes s'il y a des ressources RF disponibles pour lesdites demandes.

31. Système selon la revendication 29 ou selon la revendication 30, dans lequel l'étape b) et l'étape c) sont exécutées dans la condition suivante :
des abonnés envoient des demandes de connexion pour accéder audits schémas de communication sans fil différents.

32. Système selon la revendication 29 ou selon la revendication 30, dans lequel l'étape b) et l'étape c) sont exécutées dans la condition suivante :
des abonnés qui effectuent le transfert cellulaire envoient des demandes de transfert pour accéder audits schémas de communication sans fil différents.

33. Système selon l'une quelconque des revendications précédentes 29 à 32, dans lequel ladite allocation de ressources RF qui est exécutée par ledit allocateur de ressources (80) comprend les étapes suivantes consistant à :
juger s'il y a des porteuses RF disponibles pour lesdites demandes pour accéder aux schémas de communication sans fil différents pourvu qu'il n'y ait pas de ressources RF disponibles pour lesdites demandes ; et
allouer lesdites porteuses RF disponibles audits schémas de communication sans fil différents s'il y a des porteuses RF disponibles pour lesdites demandes et allouer les ressources RF correspondantes audites demandes.

34. Système selon la revendication 33, dans lequel ladite allocation de ressources RF qui est exécutée par ledit allocateur de ressources RF (80) comprend ce qui suit :
lorsque les communications utilisant lesdits schémas de communication sans fil se terminent, lesdites porteuses RF qui sont allouées audites demandes sont dégagées.

35. Système selon la revendication 33 ou selon la revendication 34, dans lequel ladite allocation de ressources RF qui est exécutée par ledit allocateur de ressources RF (80) comprend ce qui suit :
s'il n'y a pas de porteuses RF disponibles pour lesdites demandes, lesdites demandes sont rejetées.

36. Système selon l'une quelconque des revendications précédentes 25 à 35, dans lequel lesdits schémas de communication sans fil différents comprennent au moins deux des opérations suivantes : IS-95, CDMA, GSM, TSM, GPRS, TD-SCDMA, W-CDMA, cdma 2000 et WLAN.
